# EUROPEAN PATENT SPECIFICATION

(11) **EP 1 416 366 B1**
(45) Date of publication and mention of the grant of the patent: **08.06.2016**
(21) Application number: 03023263.1
(22) Date of filing: 14.10.2003
(51) Int. Cl.: G06F 3/0488

(54) **System and method for selectively deactivating a software input panel**
System und Verfahren zur selektiven Deaktivierung eines Softwareeingangspanels
Système et méthode pour désactiver sélectivement un panneau d'entrée logiciel

(30) Priority: 21.10.2002 US 420198 P; 23.04.2003 US 422870
(43) Date of publication of application: 06.05.2004
(73) Proprietor: Microsoft Technology Licensing, LLC, Redmond, WA 98052 (US)
(72) Inventor: Chew, Chee H., Redmond, Washington 98052 (US)
(74) Representative: Fischer, Michael Maria

(56) References cited:
- EP-A2- 0 636 974
- WO-A2-01/75580
- US-A- 4 686 522
- US-A1- 2002 011 993
- US-A1- 2002 027 569

## Description

### Field of the Invention

This invention relates to computer systems, and in particular, to selectively deactivating auto-deploy functionality for a software input panel on a mobile device.

### Background of the Invention

Small, mobile computing devices, such as hand-held and pocket-sized computers, tablet personal computers, and the like, are becoming important and popular user tools. In general, they have become small enough to be extremely convenient, while consuming less battery power, and at the same time have become capable of running more powerful applications.

Although the computing circuitry of such devices continues to shrink, size limitations are being reached as a result of human limitations. For example, a full character keyboard that enables user data input cannot be so small that human fingers cannot depress the individual keys. As a result, some devices have eliminated physical keyboards, and instead use a software input panel (SIP). A SIP can be used as a means of data entry, without the need for a physical or external keyboard. The SIP is launched within a window on the screen. The SIP is a representation of a keyboard that appears on the screen, which may have a touch-sensitive display. The user can touch keys on the SIP with a stylus. If the user touches a key on a software panel with a stylus, the computer responds in a similar manner as if such a key was pressed on a physical keyboard.

For example, the SIP may display the image of a keyboard on the screen. If a user taps one of the keys, the tap is detected as screen coordinates. The SIP then converts the tap into a character corresponding to the button that the user tapped. These characters are then sent through a software input method managing component to the system.

The mobile device may automatically deploy the SIP if certain applications are used or launched by the user. However, in some circumstances, the user may be using hardware buttons on the mobile device to navigate in an application. In those cases, the SIP is not being used but is consuming valuable screen space.

EP 0 636 974 A2 discloses a computer system with a processor which executes a single program which includes the functionality of an operating system and a plurality of separate application programs and which includes a graphic user interface. A display device is coupled to the processor which displays the graphic user interface and the user input means, such as a keyboard or a pen, is coupled to the processor for entering user input into the program.

US 4,686,522 discloses an interactive draw graphic arrangement which permits the operator to edit a graphic object that is displayed on the display device. An action select key may cause the system to display an edit action menu which lists all available edit actions and to change the normal system cursor to a pointing cursor. In order to start the graphic editing operation, the operator presses a predetermined function key on the keyboard or takes some equivalent action which the system interprets as an instruction to enter the graphic object editing mode.

In US 2002/0027569, if a device has an URL for presentation then a control point can retrieve a page from this URL, load the page into a browser and depending on the capabilities of the page, allow a user to control the device and/or view the device status. The user may select a particular device from a pull-down list and once a particular device is discovered and selected by the user, its properties may be displayed by selecting the device properties button.

WO 01/75580 A2 discloses a mobile terminal comprising a first element being a main body and having a touch screen display and a second element being a movable key pad having transparent push buttons. The second element may be coupled to the main body and cover at least a portion of the display when placed in a first position and expose the display when placed in a second position. When the movable element covers the display, the mobile terminal may displace control images which are visible through the push buttons and receive input when the push buttons are activated.

US 2002/0011993 A1 discloses a method and a system for modifying a computer system to receive text input or writing input based on the selected or deselected state of an input panel. The user may enter commands and information into a hand-held computer through input devices. When the soft input panel window is toggled between the selected and deselected states, the soft input panel manager informs the selected input method to correspondingly open/close the soft input panel window.

### Summary of the Invention

The present invention is directed to selectively deactivating auto-deploy functionality for a software input panel (SIP) on a mobile device. The present invention is directed to modifying the display characteristics of the SIP when an input device session is started. Previously, the SIP would automatically launch for a pre-determined set of circumstances that anticipated the user's desire to use the SIP. In one aspect of the present invention, the SIP is removed if already launched and the auto-deploy functionality is disabled in circumstances where it is determined that the user is likely to prefer using an alternative input mechanism. Accordingly, the amount of useful screen space for mobile computer devices is increased if the SIP is not useful.

A more complete appreciation of the present invention and its improvements can be obtained by reference to the accompanying drawing, which is briefly summarized below, to the following detailed description of illustrated embodiments of the invention, and to the appended claims.

### Brief Description of the Drawings

FIG. 1 illustrates an exemplary mobile device in which embodiments of the present invention can be implemented;
FIG. 2 is a logical block diagram illustrated components of a system that is arranged in accordance with aspects of the prevent invention; and
FIG. 3 is a logic flow diagram that illustrates a process for selectively deactivating and reactivating a software input panel, according to aspects of the present invention.

### Detailed Description of the Invention

The present invention is related to selectively deactivating and reactivating the SIP auto-deploy functionality. According to one example, a physical keyboard is integrated with the mobile device. According to another example, the physical keyboard is a separate device that may be attached and detached from the mobile device. The physical keyboard may be directly connected to the mobile device. Alternatively, the keyboard may be coupled to the mobile device through one or more intermediary devices. For example, the keyboard may be connected to a computer, wherein the computer is connected to the mobile device.

According to the invention, the SIP is hidden if the user presses one of a set of predetermined keys on the physical keyboard. Additionally, SIP auto-deploy is disabled if the user presses one of the predetermined keys on the physical keyboard.

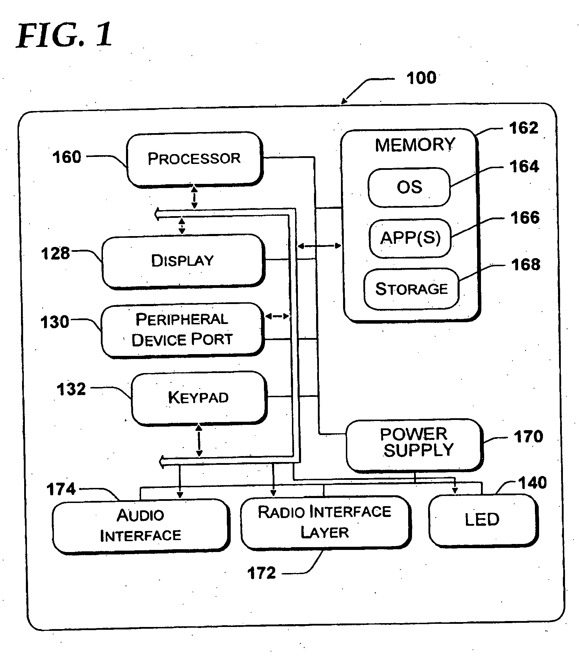

With reference to FIG. 1, one exemplary system for implementing the invention includes a computing device configured as a mobile device, such as mobile device 100. The mobile device 100 has a processor 160, a memory 162, a display 128, peripheral device port **130**, and a keypad **132**. The memory **162** generally includes both volatile memory (e.g., RAM) and non-volatile memory (e.g., ROM, Flash Memory, or the like). The mobile device **100** includes an operating system **164**, such as the Windows CE operating system from Microsoft Corporation or other operating system, which is resident in the memory **162** and executes on the processor **160**. The keypad **132** may be a push button numeric dialing pad (such as on a typical telephone), a multi-key keyboard (such as a conventional keyboard). The display **128** may be a liquid crystal display, or any other type of display commonly used in mobile devices. The display **128** is touch-sensitive, and also acts as an input device. The peripheral device port **130** may be of the type to accept additional memory cards, game cards, modem cards, or other peripheral devices.

One or more application programs **166** are loaded into memory **162** and run on the operating system **164.** Examples of application programs include phone dialer programs, installation wizard programs, email programs, scheduling programs, PIM (personal information management) programs, word processing programs, spreadsheet programs, Internet browser programs, and so forth. The mobile computing device **100** also includes non-volatile storage **168** within the memory **162.** The non-volatile storage **168** may be used to store persistent information which should not be lost if the mobile computing device **100** is powered down. The applications **166** may use and store information in the storage **168**, such as e-mail or other messages used by an e-mail application, contact information used by a PIM, appointment information used by a scheduling program, documents used by a word processing program, device driver programs, and the like.

The mobile computing device **100** has a power supply **170**, which may be implemented as one or more batteries. The power supply **170** might further include an external power source, such as an AC adapter or a powered docking cradle, which supplements or recharges the batteries.

The mobile computing device **100** is also shown with two types of external notification mechanisms: an LED **140** and an audio interface **174**. These devices may be directly coupled to the power supply **170** so that if activated, they remain on for a duration dictated by the notification mechanism even though the processor **160** and other components might shut down to conserve battery power. The LED **140** may be programmed to remain on indefinitely until the user takes action to indicate the powered-on status of the device. The audio interface **174** is used to provide audible signals to and receive audible signals from the user. For example, the audio interface **174** may be coupled to a speaker for providing audible output and to a microphone for receiving audible input, such as to facilitate a telephone conversation.

The mobile computing device **100** also includes a radio interface layer **172** that performs the function of transmitting and receiving radio frequency communications. The radio interface layer **172** facilitates wireless connectivity between the mobile computing device **100** and the outside world, via a communications carrier or service provider. Transmissions to and from the radio interface layer **172** are conducted under control of the operating system **164**. In other words, communications received by the radio interface layer **172** may be disseminated to application programs **166** via the operating system **164**, and vice versa.

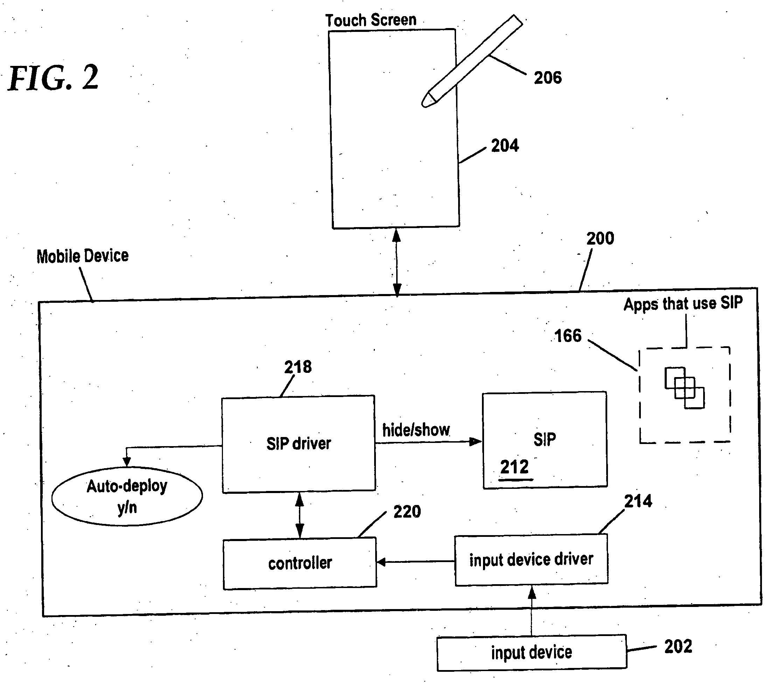

FIG. 2 is a logical block diagram illustrating components of a system that is arranged in accordance with aspects of the present invention. Illustrated in FIG. 2 are several components that implement one example of the present invention in a mobile device 200.

FIG. 2 includes a mobile device 200, an input device 202, a touch screen 204, and a stylus 206. The mobile device 200 includes application programs 166, a SIP 212, an input device driver 214, a SIP driver 218, and a controller 220.

The input device 202 and the touch screen 204 are alternative means for entering input for the mobile device 200. The stylus 206 may be used in conjunction with the touch screen 204 for entering input for the mobile device 200.

According to the invention, the input device 202 is a physical keyboard.

Shown in FIG. 2 are applications 166 that accept input from many means, such as by input device 202 or touch screen 204. Examples of the applications 166 that accept input include word processors, spreadsheets, email programs, or the like.

The SIP 212 is used in conjunction with the touch screen 204 as an alternative to the.input device 202. The SIP 212 is displayed on the screen and the user selects, using the stylus 206, icons representing buttons.

The SIP driver 218 controls the SIP 212 and includes a SIP auto-deploy mechanism. The SIP driver 218 may respond to signals from and send signals to the controller 220. According to one example, the SIP auto-deploy automatically launches the SIP 212 under certain pre-determined circumstances. The pre-determined circumstances may include launching certain programs such as applications 166 where a user is likely to input information using the SIP. The SIP driver 218 causes the SIP 212 to appear if such a program is opened and the SIP 212 is not already displayed on the screen.

As another example, the SIP driver 218 may also launch the SIP to be displayed if the cursor enters an input field in which data must be entered. The likelihood that a user may require the SIP 212 increases if the cursor enters a field that requires data entry.

In a further example, the SIP driver 218 may launch the SIP 212 if the state of any application currently running likely requires data entry. The auto-deploy functionality provides convenience to users by launching the SIP 212 if the user is likely to require the SIP 212 for data entry.

The input device driver 214 monitors the input device 202. According to the invention, if one of a set of predetermined keys is pressed on the input device 202, the input device driver 214 sends an event to the controller 220.

The controller 220 controls the SIP driver 218. The controller 220 receives events from the SIP driver 218 and input device driver 214. Controller 220 selectively activates and deactivates SIP auto-deploy functionality in response to the events from the SIP driver 218 and the input driver 214. According to one example, the controller 220 is in the shell (not shown).

The controller 220 causes the SIP 212 to be hidden (e.g. removed) if an input device session has started when the SIP 212 is currently on the screen. Additionally, if an input device session has started, the controller 220 disables SIP auto-deploy, so that the SIP 212 does not launch again until the input device session has ended. Preventing the SIP 212 from automatically launching allows the user to open and close various applications 166 that may require data input while keeping the SIP 212 hidden. The SIP 212 will not consume area on the display of the mobile device after the user has selected input data using the input device, and the user will not have to constantly remove the SIP 212 from the display every time it is automatically launched. Keeping the SIP 212 hidden increases the useful screen space on the mobile device if a physical keyboard is connected.

According to the invention, it is evaluated that an input device session has started if one of a set of predetermined keys has been pressed on a physical keyboard. The pressed key registers with the mobile device if the physical keyboard is coupled to the mobile device. Correspondingly, a physical keyboard may not be coupled to the mobile device if no key press registers with the mobile device.

According to one example, it is evaluated that an input device session has started if an external physical keyboard has been attached to the mobile device.

According to the invention, it is evaluated that an input device session has started if one of a set of pre-determined keys has been pressed on a physical keyboard. In one example, the set of pre-determined keys includes every key on the external keyboard, so that it is evaluated that an input device session has started if any key has been pressed on a physical keyboard. In another example, the set of pre-determined keys consists of the alphanumeric keys on the physical keyboard, so that it is evaluated that the input device session has started if an alphanumeric key has been pressed on the physical keyboard. According to one example, the set of pre-determined keys does not include keys that the user might press if the user is still using the stylus. For example, the set of pre-determined keys may not include keys such as application keys, direction pads, or rockers, because the user may still be using the stylus even though the user pressed one of those keys.

According to one example, evaluating whether one of the set of pre-determined keys on a physical keyboard has been pressed is implemented as follows. A shell is notified if a hardware key is pressed. The event of a hardware key being pressed is set on the "down." That is, the event is set if the key is initially pressed downward. Sample code for implementing this feature is shown below:

```
 v_hevtKeyPressed = CreateEvent(NULL,
      /*bManualReset */FALSE,
      /*bInitialState */FALSE,
      TEXT("_KeyPress"));
             SetEvent(v_hevtKeyPressed);
```

The controller 220 causes the SIP auto-deploy to reactivate if the keyboard session is over. According to the invention, it is evaluated that the input device session is over if no key has been pressed on the keyboard 202 for a pre-determined period of time. According to another example, the input device session is over if the stylus (206) is tapped on the screen. According to another example, the input device session is over if sensors on the mobile device 200 determine that the stylus 206 has been removed from a holder. A mobile device 200 may include a holder (not shown) on the side of the mobile device 200 that is used to hold the stylus 206 when the stylus 206 is not being used.

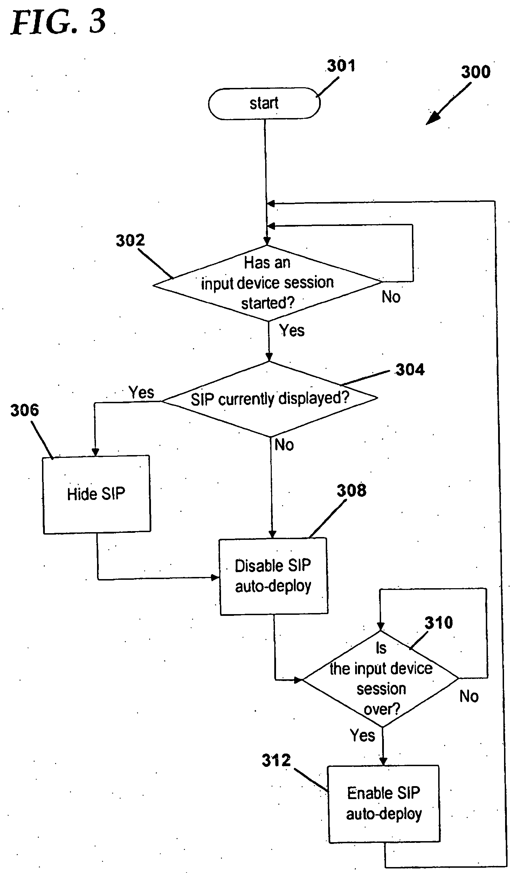

FIG. 3 is a logic flow diagram that illustrates a process 300 for selectively deactivating and reactivating a software input panel, according to aspects of the invention. Process 300 removes the software input panel from the display of the mobile device, and prevents auto-deploy of the SIP while an input device is being used. Process 300 begins at start block 301, where a mobile device that is activated. Processing then proceeds from start block 301 to decision block 302.

At decision block 302, it is evaluated whether an input device session has started. The process returns to decision block 302 if the input device session has not started. Alternatively, the process proceeds from decision block 302 to decision block 304 if the input device session has started. At decision block 304, it is evaluated whether the SIP is currently displayed on the screen. Process 300 advances from decision block 304 to block 308 if the SIP is not currently displayed on the screen. Alternatively, process 300 proceeds from decision block 304 to block 306 if the SIP is displayed on the screen.

At block 306, the SIP currently displayed on the mobile device is hidden (e.g., removed). The process then proceeds from block 306 to block 308. At block 308, the SIP auto-deploy mechanism is disabled. Process 300 then proceeds from block 308 to decision block 310. At decision block 310, it is evaluated whether the input device session is over. Process 300 proceeds from decision block 310 to decision block 312 if the input device session is over. Alternatively, process 300 returns to decision block 310 if the input device session is not over.

At block 312, the SIP auto-deploy is re-enabled. Process 300 is recursive, and returns from block 312 to decision block 302.

## Claims

1. A computer-implemented method (300), comprising:
detecting (302) whether an input device session has started, wherein the input device session has started, if one of a set of pre-determined keys has been pressed on a physical keyboard (202);
hiding (306) a software input panel, SIP, (212), if the input device session has started (302) and the SIP (212) is currently displayed (304) on a touch screen (204) of a mobile device (200), and disabling (308) a SIP auto-deploy mechanism, wherein the SIP auto-deploy mechanism is adapted to launch the SIP (212) under pre-determined circumstances, wherein the SIP (212) is launched within a window on the touch screen (204), is a representation of a keyboard that appears on the touch screen (204) and is used in conjunction with the touch screen (204) as an alternative to the physical keyboard (202);
detecting (310) whether the input device session has ended, wherein the input device session has ended, if no key has been pressed on the physical keyboard (202) for a pre-determined period of time; and
re-enabling (312) the SIP auto-deploy mechanism, if the input device session has ended.

2. The method (300) as in claim 1, wherein the set of pre-determined keys comprises the alphanumeric keys on the physical keyboard (202).

3. The method (300) as in claim 2, wherein the set of pre-determined keys consists of all keys on the physical keyboard (202) except for application keys, direction pads, and rockers.

4. A computer-readable medium comprising computer-executable instructions adapted to carry out the method (300) of any of claims 1 to 3 when run on a computer.

5. A mobile device (200), comprising
a touch screen (204);
a physical keyboard (202);
a physical keyboard driver (214) configured to monitor the physical keyboard (202);
a software input panel, SIP, (212) configured to be launched within a window on the touch screen (204), to be a representation of a keyboard that appears on the touch screen (204) and to be used in conjunction with the touch screen (204) as an alternative to the physical keyboard (202);
a SIP driver (218) configured to control the SIP (212), to include a SIP auto-deploy mechanism, which is adapted to launch the SIP (212) under pre-determined circumstances, and to respond to signals from and send signals to a controller (220);
the controller (220) being configured to receive events from the SIP driver (218) and the physical keyboard driver (214) and to control the SIP driver (218) by:
detecting (302) whether an input device session has started, wherein the input device session has started, if one of a set of pre-determined keys has been pressed on the physical keyboard (202), causing (306) the SIP (212) to be hidden, if the input device session has started and the SIP (212) is currently displayed (304) on the touch screen (204), and disabling (308) the SIP auto deploy mechanism;
detecting (310) whether the input device session has ended, wherein the input device session has ended, if no key has been pressed on the physical keyboard (202) for a pre-determined period of time; and
re-enabling (312) the SIP auto-deploy mechanism, if the input device session has ended.

## Patentansprüche

1. Computerimplementiertes Verfahren (300), umfassend:
Detektieren (302), ob eine Eingabevorrichtungssitzung begonnen hat, wobei die Eingabevorrichtungssitzung begonnen hat, wenn auf einer physischen Tastatur (202) eine aus einem Satz vorgegebener Tasten gedrückt worden ist;
Ausblenden (306) eines Software-Eingabepanels, SIP, (212), wenn die Eingabevorrichtungssitzung begonnen (302) hat und das SIP (212) aktuell auf einem Berührungsbildschirm (204) einer Mobilvorrichtung (200) angezeigt (304) wird, und Deaktivieren (308) eines SIP-Selbstbereitstellungsmechanismus, wobei der SIP-Selbstbereitstellungsmechanismus ausgelegt ist, das SIP (212) unter vorgegebenen Umständen zu starten, wobei das SIP (212) in einem Fenster auf dem Berührungsbildschirm (204) gestartet wird, es eine Darstellung einer Tastatur ist, die auf dem Berührungsbildschirm (204) erscheint, und in Verbindung mit dem Berührungsbildschirm (204) als eine Alternative zur physischen Tastatur (202) verwendet wird;
Detektieren (310), ob die Eingabevorrichtungssitzung beendet ist, wobei die Eingabevorrichtungssitzung beendet ist, falls auf der physischen Tastatur (202) für einen vorgegebenen Zeitraum keine Taste gedrückt worden ist; und
Reaktivieren (312) des SIP-Selbstbereitstellungsmechanismus, falls die Eingabevorrichtungssitzung beendet ist.

2. Verfahren (300) nach Anspruch 1, wobei der Satz vorgegebener Tasten die alphanumerischen Tasten auf der physischen Tastatur (202) umfasst.

3. Verfahren (300) nach Anspruch 2, wobei der Satz vorgegebener Tasten aus allen Tasten auf der physischen Tastatur (202) außer den Funktionstasten, dem Richtungssteuerungspad und den Wipptasten besteht.

4. Computerlesbares Medium mit computerausführbaren Anweisungen, die ausgelegt sind, das Verfahren (300) nach einem der Ansprüche 1 bis 3 auszuführen, wenn sie auf einem Computer abgearbeitet werden.

5. Mobilvorrichtung (200) mit:
einem Berührungsbildschirm (204);
einer physischen Tastatur (202);
einem Treiber (214) der physischen Tastatur, der ausgelegt ist, die physische Tastatur (202) zu überwachen;
einem Software-Eingabepanel, SIP, (212), das ausgelegt ist, in einem Fenster auf dem Berührungsbildschirm (204) gestartet zu werden, um eine Darstellung einer Tastatur zu sein, die auf dem Berührungsbildschirm (204) erscheint, und in Verbindung mit dem Berührungsbildschirm (204) als eine Alternative zur physischen Tastatur (202) verwendet zu werden;
einem SIP-Treiber (218), der ausgelegt ist, das SIP (212) zu steuern, einen SIP-Selbstbereitstellungsmechanismus aufzuweisen, der ausgelegt ist, das SIP (212) unter vorgegebenen Umständen zu starten, und auf Signale aus einer Steuervorrichtung (220) zu reagieren sowie Signale dorthin zu senden,
wobei die Steuervorrichtung (220) ausgelegt ist, Ereignisse aus dem SIP-Treiber (218) und dem Treiber (214) der physischen Tastatur zu empfangen und den SIP-Treiber (218) zu steuern, durch:
Detektieren (302), ob eine Eingabevorrichtungssitzung begonnen hat, wobei die Eingabevorrichtungssitzung begonnen hat, falls auf einer physischen Tastatur (202) eine aus einem Satz vorgegebener Tasten gedrückt worden ist, wobei veranlasst (306) wird, dass das SIP (212) ausgeblendet wird, wenn die Eingabevorrichtungssitzung begonnen hat und das SIP (212) aktuell auf einem Berührungsbildschirm (204) angezeigt (304) wird, und Deaktivieren (308) des SIP-Selbstbereitstellungsmechanismus;
Detektieren (310), ob die Eingabevorrichtungssitzung beendet ist, wobei die Eingabevorrichtungssitzung beendet ist, falls auf der physischen Tastatur (202) für einen vorgegebenen Zeitraum keine Taste gedrückt worden ist, und
Reaktivieren (312) des SIP-Selbstbereitstellungsmechanismus, falls die Eingabevorrichtungssitzung beendet ist.

## Revendications

1. Procédé mis en oeuvre sur ordinateur (300), comprenant les étapes consistant à:
détecter (302) si une séance de dispositif d'entrée a démarré, dans lequel la séance de dispositif d'entrée a démarré si l'une d'un jeu de touches prédéterminées a été pressée sur un clavier physique (202);
dissimuler (306) un panneau d'entrée logiciel SIP (212) si la séance de dispositif d'entrée a démarré (302) et que le SIP (212) est couramment affiché (304) sur un écran tactile (204) d'un dispositif mobile (200) et désactiver (308) un mécanisme d'auto-déploiement du SIP, dans lequel le mécanisme d'auto-déploiement du SIP est à même de lancer le SIP (212) dans des conditions prédéterminées, dans lequel le SIP (212) est lancé dans une fenêtre de l'écran tactile (204), est une représentation d'un clavier qui apparaît sur l'écran tactile (204) et est utilisé conjointement avec l'écran tactile (204) comme alternative au clavier physique (202);
détecter (310) si la séance de dispositif d'entrée s'est terminée, dans lequel la séance du dispositif d'entrée s'est terminée si aucune touche n'a été pressée sur le clavier physique (202) pendant une période de temps prédéterminée; et
réactiver (312) le mécanisme d'auto-déploiement du SIP si la séance de dispositif d'entrée s'est terminée.

2. Procédé (300) selon la revendication 1, dans lequel le jeu de touches prédéterminées comprend les touches alphanumériques sur le clavier physique (202).

3. Procédé (300) selon la revendication 2, dans lequel le jeu de touches prédéterminées est constitué de toutes les touches du clavier physique (202) sauf les touches d'application, les pavés de direction et les touches à basculeur.

4. Support lisible sur ordinateur comprenant des instructions exécutables sur ordinateur qui sont à même d'effectuer le procédé (300) selon l'une quelconque des revendications 1 à 3 lorsqu'il tourne sur un ordinateur.

5. Dispositif mobile (200) comprenant:
un écran tactile (204);
un clavier physique (202);
un gestionnaire de clavier physique (214) configuré pour surveiller le clavier physique (202);
un panneau d'entrée logiciel SIP (212) configuré pour être lancé dans une fenêtre de l'écran tactile (204), pour être une représentation d'un clavier qui apparaît sur l'écran tactile (204) et pour être utilisé conjointement avec l'écran tactile (204) comme alternative au clavier physique (202);
un gestionnaire de SIP (218) configuré pour commander le SIP (212), pour inclure un mécanisme d'auto-déploiement du SIP qui est à même de lancer le SIP (212) dans des conditions prédéterminées et pour répondre à des signaux provenant d'un contrôleur (220) et envoyer des signaux à celui-ci;
le contrôleur (220) étant configuré pour recevoir des événements du gestionnaire de SIP (218) et du gestionnaire de clavier physique (214) et pour commander le gestionnaire de SIP (218):
en détectant (302) si une séance d'un dispositif d'entrée a démarré, dans lequel la séance du dispositif d'entrée a démarré si l'une d'un jeu de touches prédéterminées a été pressée sur le clavier physique (202), amenant (306) le SIP (212) à se dissimuler si la séance du dispositif d'entrée a démarré et que le SIP (212) est couramment affiché (304) sur l'écran tactile (204) et désactivant (308) le mécanisme d'auto-déploiement du SIP;
en détectant (310) si la séance du dispositif d'entrée s'est terminée, dans lequel la séance du dispositif d'entrée s'est terminée si aucune touche n'a été pressée sur le clavier physique (202) pendant une période de temps prédéterminée; et
en réactivant (312) le mécanisme d'auto-déploiement du SIP si la séance du dispositif d'entrée s'est terminée.
